# EUROPEAN PATENT APPLICATION

(11) **EP 1 544 769 A1**
(43) Date of publication of application: **22.06.2005**
(21) Application number: 03798424.2
(22) Date of filing: 19.09.2003
(51) Int. Cl.: G06F 17/60

(54) **DIGITAL BROADCAST SHOPPING SYSTEM**

(30) Priority: 24.09.2002 JP 2002277007
(71) Applicant: MATSUSHITA ELECTRIC INDUSTRIAL CO., LTD., Kadoma-shi, Osaka 571-8501 (JP)
(72) Inventor: MONTA, Hiroki, Mishima-gun, Osaka 618-0014 (JP); KAWABATA, Minoru, Takatsuki-shi, Osaka 569-1046 (JP)
(74) Representative: Balsters, Robert
(86) International application number: PCT/JP2003/012000
(87) International publication number: WO 2004/029846

(57) **Abstract**

Provided is a digital broadcast shopping system which permits a party contributing to the digital broadcast shopping system to receive a consideration for its contribution to the digital broadcast shopping system. Thus is provided the digital broadcast shopping system wherein a receiver manufacturer can also receive a consideration for its contribution to the digital broadcast shopping system. The digital broadcast shopping system includes: a digital broadcast receiver operative to send out purchaser-issued information; a receiver manufacturer-side processor operative to receive the purchaser-issued information and to send out billing information on a receiver usage charge; and a product distributor-side processor operative to receive the purchaser-issued information and the billing information on the receiver usage charge and to perform a payment procedure for the receiver usage charge.

## Description

### TECHNICAL FIELD

The present invention relates to a shopping system utilizing digital broadcast or a digital broadcast shopping system.

### BACKGROUND ART

Recently, BS broadcasts (television broadcasts utilizing a Japanese broadcasting satellite) and CS broadcasts (television broadcast utilizing a Japanese communications satellite) have been digitized. Now, digital television broadcasts (hereinafter, referred to as "digital broadcasts") are moving toward widespread proliferation. The digital broadcasts are drawing attention in terms of enhanced image and sound qualities and also of shopping services available via data broadcasts.

In the digital broadcast shopping system, CMs (commercial messages) are transmitted via broadcast whereas data included in the CMs are recorded by a mass-storage device within a receiver. The shopping service is provided as follows. Data such as CMs sent via broadcast are decoded and displayed by a TV set or the like such that a receiver may do shopping as viewing the TV screen. When the receiver decides to purchase a product or requests for additional product information, the receiver may order the product or make such a request via a modem incorporated in a digital broadcast receiver.

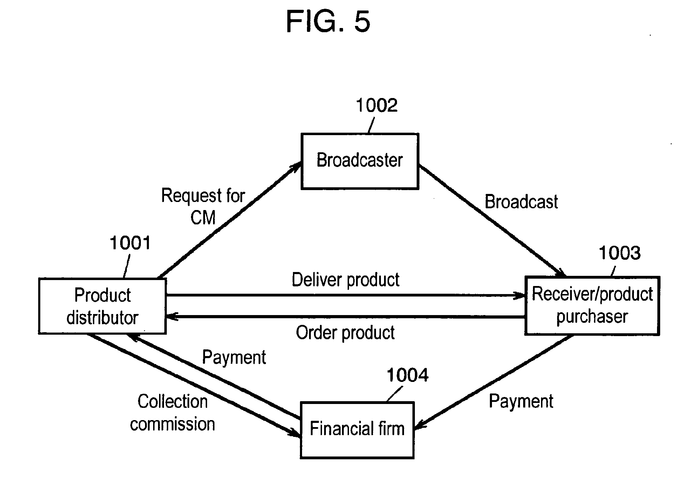

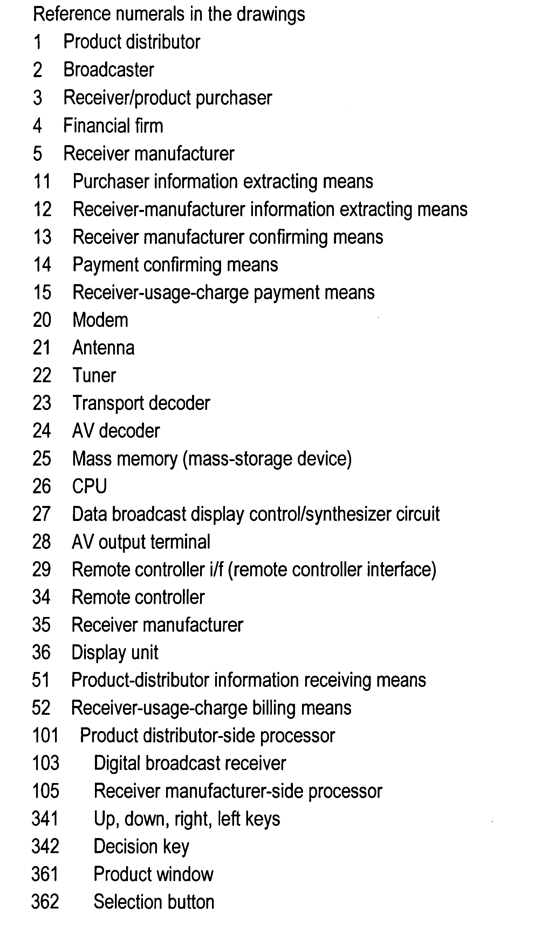

Referring to Fig.5, a conventional digital broadcast shopping system will be described as below. A product distributor 1001 commissions a broadcaster 1002 to provide a digital broadcast shopping service and pays a commercial commission (hereinafter, referred to as "CM commission"), as a charge for the service, to the broadcaster 1002. The broadcaster 1002, in turn, digitally broadcasts a CM for the commissioned product as the digital broadcast shopping service. A receiver/product purchaser 1003 receives the broadcasted service to do digital broadcast shopping.

Where the receiver/product purchaser 1003 wants to purchase a product from the product distributor 1001, the receiver/product purchaser can acquire the product by paying a price for the product to a financial firm 1004. The financial firm 1004 transfers the received money to the product distributor 1001. At this time, the financial firm 1004 receives a collection commission from the product distributor 1001.

According to the above arrangement, the digital broadcast shopping service enables the product distributor to earn the money for the product, the financial firm to earn the collection commission and the broadcaster to earn the CM commission. However, although a manufacturer of the digital broadcast receiver contributes to the digital broadcast shopping system, the manufacturer does not receive a consideration for its contribution to the digital broadcast shopping system. The manufacturer of the receiver earns the price for the receiver when the receiver is sold. However, it is expected that the manufacturer will continue to make corporate efforts for the sake of development and production of the receiver. On the other hand, it is likely that the price for the manufactured receiver will decrease in future. As a result, the receiver manufacturer will be weakened in operational constitution. Finally, the receiver manufacturer may become unable to fully contribute to the development of the domestic industries.

### DISCLOSURE OF THE INVENTION

A digital broadcast shopping system comprises:
a digital broadcast receiver operative to send out purchaser-issued information;
a receiver manufacturer-side processor operative to receive the purchaser-issued information and to send out billing information on a receiver usage charge; and
a product distributor-side processor operative to receive the purchaser-issued information and the billing information on the receiver usage charge and to perform a payment procedure for making payment of the receiver usage charge.

### BRIEF DESCRIPTION OF THE DRAWINGS

Fig.1 is a block diagram showing an arrangement of a digital broadcast shopping system according to an embodiment of the invention;
Fig.2 is a block diagram showing an arrangement of a digital broadcast receiver shown in Fig.1;
Fig.3 is a schematic diagram showing further details of a portion belonging to a receiver/product purchaser of the digital broadcast shopping system according to the embodiment of the invention;
Fig.4 is a schematic diagram showing further details of portions belonging to a receiver manufacturer and a product distributor of the digital broadcast shopping system according to the embodiment of the invention; and
Fig.5 is a block diagram showing an arrangement of a conventional digital broadcast shopping system.

### DETAILED DESCRIPTION OF THE PREFERRED EMBODIMENTS

The invention is directed to a solution to the aforementioned problem of the prior art and has an object to provide a digital broadcast shopping system which permits a party contributing to the digital broadcast shopping system to receive a consideration for its contribution. That is, the invention provides the digital broadcast shopping system which also permits a receiver manufacturer to receive a consideration for the contribution made by the receiver manufacturer to the digital broadcast shopping system.

Referring to the accompanying drawings, the digital broadcast shopping system according to an embodiment of the invention will be specifically described as below.

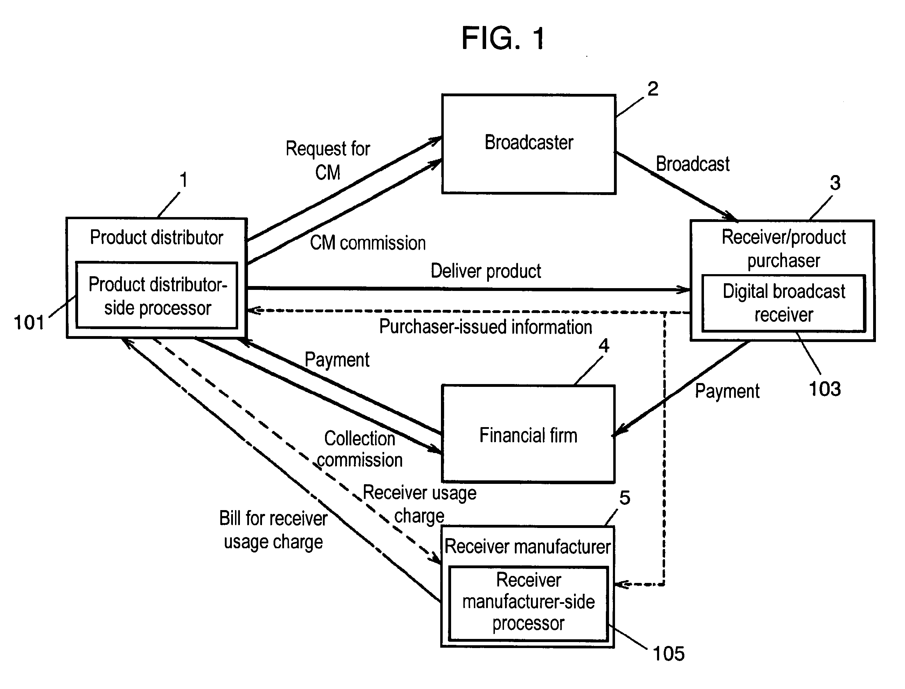

Fig.1 is a block diagram showing an arrangement of the digital broadcast shopping system according to the embodiment of the invention.

First, operations of the system will be described with reference to Fig.1. A product distributor 1 requests a broadcaster 2 for a digital broadcast shopping service and pays a CM commission, as a charge for the service, to the broadcaster 2. The broadcaster 2 broadcasts a CM for a requested product by the product distributor 1 as the digital broadcast shopping service. A receiver/product purchaser 3 receives the broadcasted CM and performs digital broadcast shopping. A financial firm 4 receives money which the receiver/product purchaser 3 paid for the product. A receiver manufacturer 5 is a manufacturer which manufactures a digital broadcast receiver 103.

Specifically, the digital broadcast shopping system includes: a digital broadcast receiver 103 operative to transmit purchaser-issued information to a receiver manufacturer-side processor 105 and a product distributor-side processor 101; a receiver manufacturer-side processor 105 operative to receive the purchaser-issued information and to transmit billing information on a receiver usage charge to the product distributor-side processor 101; and the product distributor-side processor 101 operative to receive the purchaser-issued information and the billing information on the receiver usage charge and to perform a payment procedure for making payment of the receiver usage charge. The product distributor 1 owns the product distributor-side processor 101 whereas the receiver manufacturer 5 owns the receiver manufacturer-side processor 105.

The digital broadcast receiver 103 generates the purchaser-issued information based on operations taken by the receiver/product purchaser 3 and then sends out the resultant information. The purchaser-issued information includes: information on a purchased product; information on a purchaser; information on a receiver manufacturer; information on a product distributor; and decision key information. The information on the purchased product includes at least either one of a product name and a product number of a product to be purchased. The information on the purchaser includes at least any one of a designated bank, purchaser's account number, a payment method and an information item as to whether payment has been made or not. The information on the receiver manufacturer includes at least any one of a name of a manufacturer of the digital broadcast receiver, a serial number of the receiver, an information item on purchaser's ID, and receiver-manufacturer's account number of a designated bank to which the receiver usage charge is to be transferred. The information on the product distributor includes at least either one of a name and an address of the product distributor. The decision key information includes at least any one of the information on the product distributor, purchase decision information, purchase cancellation information and information on request for product information and brochure. The purchaser-issued information may include records or history of the decision key information.

The financial firm 4 responds to money paid by the receiver/product purchaser 3 and makes payment to the product distributor 1. The product distributor 1, in turn, pays a collection commission to the financial firm 4. Based on the purchaser-issued information sent from the digital broadcast receiver 103, the receiver manufacturer 5 sends out a bill for the receiver usage charge to the product distributor 1. The product distributor 1 responds to the bill for the receiver usage charge by paying the receiver usage charge to the receiver manufacturer 5. There may be a case where the receiver usage charge is paid via the financial firm 4. Based on the purchaser-issued information, the product distributor 1 sends a product to the receiver/product purchaser 3.

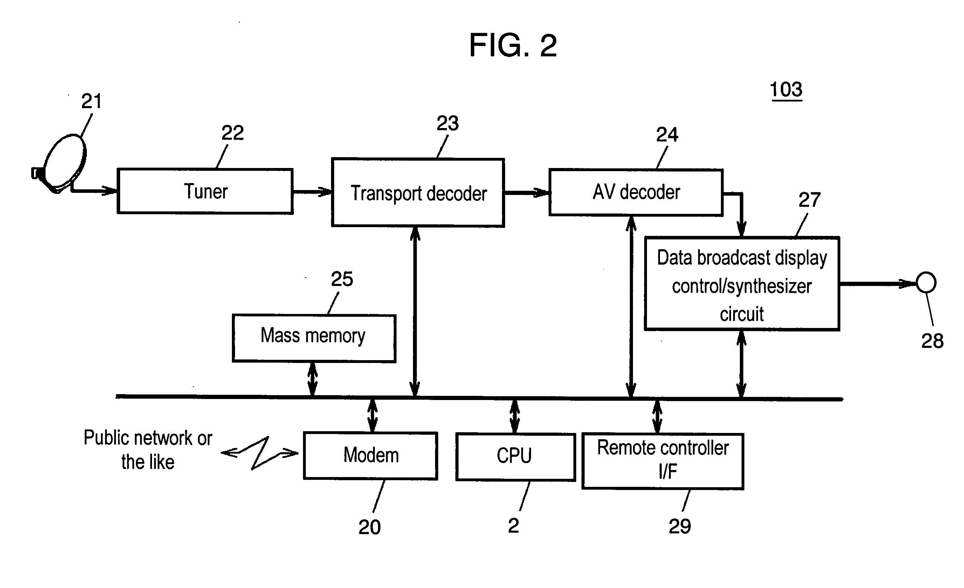

Fig.2 is a block diagram showing an arrangement of the digital broadcast receiver 103 for receiving the digital broadcast. Referring to Fig.2, an antenna 21 receives the digital broadcast whereas a tuner 22 selects a channel of the received digital broadcast and demodulates the received broadcast for generating an MPEG2 transport stream (hereinafter, referred to as "MPEG2-TS"). A transport decoder 23 filters the resultant MPEG2-TS through a PID filter and a selection filter, thereby extracting an AV stream representing video and audio streams, and a data broadcast stream. The AV stream includes an video stream and an audio stream. An AV decoder 24 decodes the AV stream into an video signal and an audio signal. A CPU 26 controls the digital broadcast receiver and also decodes the data broadcast stream for generating a data broadcast signal for displaying data broadcast contents. A mass memory 25 as a mass-storage device holds the MPEG2-TS, the data broadcast signal and data received by a modem 20. The mass memory 25 also serves as a main memory and a program memory of the CPU 26. A data broadcast display control/synthesizer circuit 27 synthesizes a display control signal for the data broadcast signal stored in the mass memory 25 with the video signal from the AV decoder 24. The synthesized signal is outputted from an AV output terminal 28. The modem 20 is connected to a public network or the like so as to be used in communications of audiovisual information and the like. A remote controller interface circuit (referred to as "remote controller I/F" hereinafter and referred to as "remote controller I/F" in Fig.2) 29 is an interface portion with a remote controller for controlling the digital broadcast receiver 103.

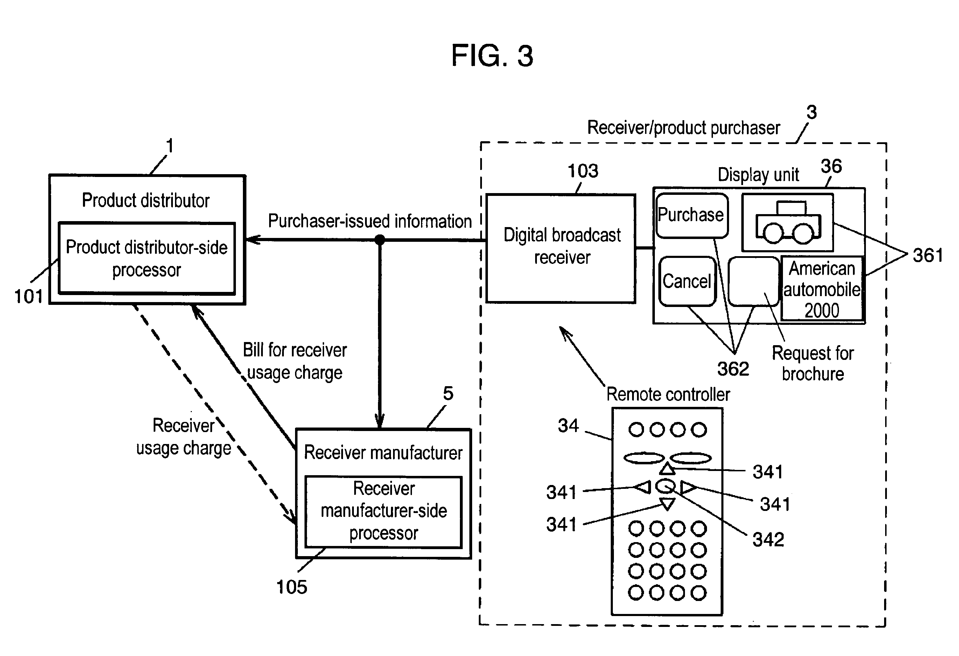

Fig.3 is a schematic diagram showing further details of a portion belonging to the receiver/product purchaser 3 of the digital broadcast shopping system according to the embodiment of the invention. In Fig. 3, components represented by the same reference numerals as those of Fig.1 are the same as those of Fig.1 and hence, a detailed description thereof is dispensed with. An output from the digital broadcast receiver 103 is inputted to a display unit 36. By way of an example of the digital broadcast receiver 103 shown in Fig.2, a signal outputted from the AV output terminal 28 is inputted to the display unit 36. Thus, the display unit 36 provides display of the inputted signal. Windows on a screen of the display unit 36 are an example of a display of the digital broadcast shopping service. In this example, product windows 361 and selection buttons 362 are displayed on the screen. The product windows 361 show an outside appearance, specifications, features and such of a product. As the selection buttons 362, on the other hand, areas for clicking on items such as request for brochure, purchase of a product of interest and cancellation of purchase are shown on the screen. When the receiver/product purchaser 3 performs shopping on the screen, the purchaser may select any one of the selection buttons 362 for effecting purchase, cancellation or request for brochure by means of up, down, right and left keys 341 on a remote controller 34 as viewing the product windows 362. Then, the purchaser may press a decision key 342 thereby effecting the contents indicated by the selected buttons. In this manner, the purchaser may press any of the selection buttons 362 and the decision buttons including the decision keys disposed on the remote controller 34, thereby transmitting the purchaser-issued information to the processor 101 owned by the product distributor of the product of interest and to the receiver manufacturer-side processor 105 via the modem 20 incorporated in the digital broadcast receiver 103.

It is noted that the purchaser-issued information is transmitted to the product distributor-side processor 101 and the receiver manufacturer-side processor 105 in accordance with a predetermined communication protocol.

It is noted that Fig.3 omits the details of a communication interface for data encoding or modulating in accordance with the communication protocol.

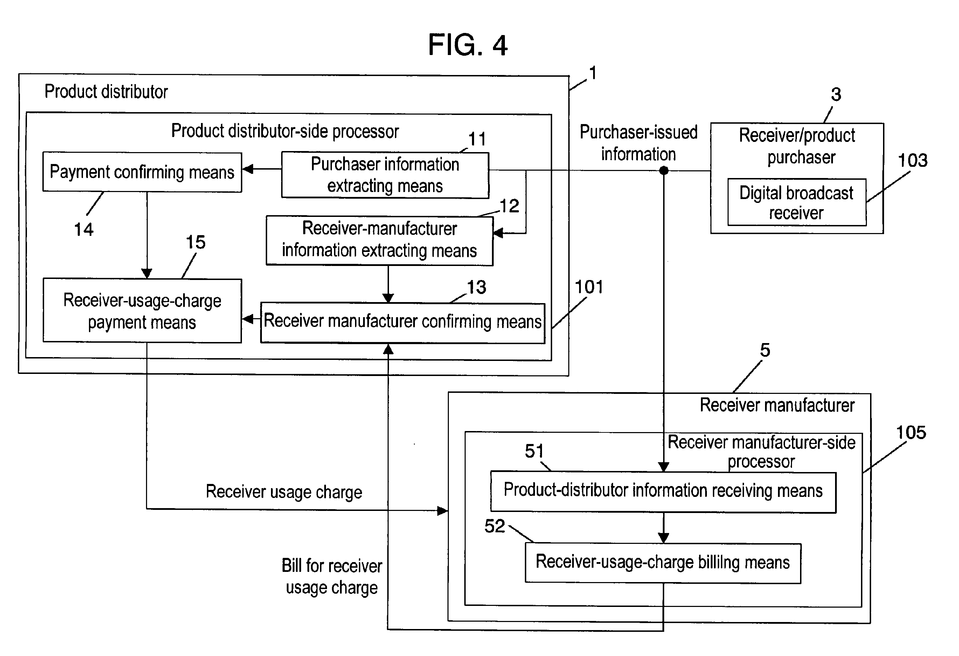

Next, Fig.4 is a schematic diagram showing further details of portions belonging to the receiver manufacturer 5 and the product distributor 1 of the digital broadcast shopping system according to the embodiment of the invention. Incidentally, components represented by the same reference numerals as those of Figs.1 and 3 are the same as those of Figs.1 and 3 and hence, a detailed description thereof is dispensed with. Further, the illustration of the communication interface for encoding, decoding, modulating or demodulating the data in accordance with the communication protocol is dispensed with.

Referring to Fig.4, the receiver manufacturer-side processor 105 includes product-distributor information receiving means 51 and receiver-usage-charge billing means 52. The product-distributor information receiving means 51 is operative to receive the purchaser-issued information outputted from the digital broadcast receiver 103 and to extract the name and address of the product distributor 1 from the purchaser-issued information. The receiver-usage-charge billing means 52 generates information for billing for the receiver usage charge based on the name and address of the product distributor 1 extracted by the product-distributor information receiving means 51. Subsequently, the receiver-usage-charge billing means 52 sends out the generated information to the product distributor-side processor 101. That is, the receiver-usage-charge billing means 52 claims for the payment of the receiver usage charge against the product distributor-side processor 101.

The product distributor-side processor 101 includes purchaser information extracting means 11, payment confirming means 14, receiver-manufacturer information extracting means 12, receiver manufacturer confirming means 13 and receiver-usage-charge payment means 15. The purchaser information extracting means 11 is operative to receive the purchaser-issued information from the digital broadcast receiver 103 and to extract purchaser information from the purchaser-issued information. The payment confirming means 14 acquires information from an output from the purchaser information extracting means 11, the acquired information indicating that the receiver/product purchaser 3 has made payment.

The receiver-manufacturer information extracting means 12 extracts, from the purchaser-issued information, at least any one of the name of the receiver manufacturer 5 which manufactured the digital broadcast receiver 103, a designated bank to which the usage charge for the receiver of the receiver manufacturer 5 is to be transferred, and information on manufacturer's bank account number. The receiver manufacturer confirming means 13 confirms as to whether a receiver manufacturer notified by the receiver manufacturer-side processor 105 which sent the bill for the receiver usage charge agrees with a receiver manufacturer extracted by the receiver manufacturer extracting means 12. The receiver-usage-charge payment means 15 performs a payment procedure based on the payment information sent from the payment confirming means 14 thereby to make payment of the receiver usage charge to the receiver manufacturer 5 confirmed by the receiver manufacturer confirming means 13. In the payment procedure for making payment of the receiver usage charge to the receiver manufacturer, it is also possible to transfer the receiver usage charge to the manufacturer's account number of the bank designated by the receiver manufacturer confirmed by the confirming means 13. In this manner, the receiver usage charge is paid to the receiver manufacturer 5 by means of the receiver-usage-charge payment means 15.

By the way, description is made on one exemplary mode of signals transmitted/received between the digital broadcast receiver 103, the product distributor-side processor 101, the receiver manufacturer-side processor 105 and the financial firm 4 shown in Figs.1 to 4. These signals include identification of a signal sender, identification of a signal receiver, a type of sent information, sent information per se, redundant information for error correction and the like. These information items are arranged in a predetermined order to form a data array. The data array is subjected to a predetermined modulation. The aforesaid purchaser-issued information is also represented by such a signal. The product-distributor information receiving means 51, the purchaser information extracting means 11 and the receiver-manufacturer information extracting means 12 monitor the identification of a signal sender, the identification of a signal receiver, the type of sent information, the sent information per se and the like so that the means may individually extract necessary information items. Each of the means performs each predetermined processing based on the extracted information.

The invention may be arranged such that the receiver usage charge for the digital broadcast receiver does not depend upon a unit price for a purchased product nor upon what part of a hardware of the receiver that is used. As a specific example, an arrangement may be made such as to claim a predetermined charge from the receiver/product purchaser 3 each time the receiver/product purchaser 3 requests for a brochure or each time the receiver/product purchaser 3 makes decision on purchase.

Alternatively, the invention may also be arranged such that the receiver usage charge depends upon the unit price for the purchased product or upon what part of the hardware of the receiver that is used.

According to the invention, a charge is incurred each time the purchaser manipulates the decision key 342 of the remote controller 34 to make any one of decision on purchase, cancellation of purchase and request for product information and brochure. It is noted here that the figure of the charge may be varied depending upon the cases of decision on purchase, cancellation of purchase and request for product information and brochure.

As described above, the embodiment of the invention permits the manufacturer of the digital broadcast receiver to charge and claim the product distributor for the receiver usage charge each time the product distributor receives information on decision on purchase, cancellation of purchase or request for product information and brochure via the digital broadcast shopping system. Thus, the manufacturer of the digital broadcast receiver can gain benefits corresponding to the contribution made by the manufacturer to the digital broadcast shopping system.

As described above, the invention can provide the digital broadcast shopping system which permits the party contributing to the digital broadcast shopping system to receive a consideration for its contribution. According to the invention, an excellent effect is afforded that the digital broadcast shopping system also permitting the receiver manufacturer to receive the consideration for its contribution to the digital broadcast shopping system is provided.

### INDUSTRIAL APPLICABILITY

According to the invention, there is provided the digital broadcast shopping system which permits the party contributing to the digital broadcast shopping system to receive a consideration for its contribution. According to the invention, the receiver manufacturer can also receive the consideration for its contribution to the digital broadcast shopping system.

## Claims

1. A digital broadcast shopping system comprising:
a digital broadcast receiver operative to send out purchaser-issued information;
a receiver manufacturer-side processor operative to receive the purchaser-issued information and to send out billing information on a receiver usage charge; and
a product distributor-side processor operative to receive the purchaser-issued information and the billing information on the receiver usage charge and to perform a payment procedure for making payment of the receiver usage charge.

2. A digital broadcast shopping system as claimed in Claim 1, wherein the purchaser-issued information includes:
purchased product information including at least either one of a name of a product to be purchased and a product number thereof;
purchaser information including at least any one of a bank designated by a purchaser, purchaser's account number and a payment method;
receiver manufacturer information including at least any one of a name of a manufacturer of the digital broadcast receiver, a product number of the receiver, information on purchaser's ID, a designated bank to which the usage charge for the receiver of the receiver manufacturer is to be transferred, and a bank account number of the receiver manufacturer;
product distributor information including at least a name and an address of the product distributor; and
decision key information including at least any one of purchase decision information, purchase cancellation information and information on a request for product information and brochure.

3. A digital broadcast shopping system as claimed in Claim 2, wherein the digital broadcast receiver is controlled via a remote controller;
wherein the remote controller comprises a decision button for effecting at least any one of decision on purchase, cancellation of purchase and request for product information and brochure when shopping is performed via digital broadcast, and
wherein the digital broadcast receiver is caused to send out the purchaser-issued information by pressing the decision button.

4. A digital broadcast shopping system as claimed in Claim 2, wherein the digital broadcast receiver comprises:
an antenna for receiving digital broadcast;
a tuner operative to select a channel of the digital broadcast received by the antenna and to perform a demodulation processing on the digital broadcast;
a transport decoder for extracting an video stream, an audio stream and a data broadcast stream from a signal, the channel of which is selected by the tuner and which is demodulated by the tuner;
an AV decoder for decoding the video stream or the audio stream into an video signal or an audio signal;
a CPU for decoding the data broadcast stream into a data broadcast signal;
a data broadcast display control/synthesizer circuit for synthesizing the data broadcast signal with the video signal;
an output terminal for outputting an output from the synthesizer circuit and the audio signal;
a modem responsible for connection with a public network;
a remote controller interface circuit for controlling the digital receiver via a remote controller; and
a mass-storage device for storing the data broadcast stream, the data broadcast signal, the video stream and the audio stream.

5. A digital broadcast shopping system as claimed in Claim 2, wherein the receiver manufacturer-side processor comprises:
product-distributor information receiving means operative to receive the purchaser-issued information and to extract the product distributor information from the purchaser-issued information; and
receiver-usage-charge billing means for billing the receiver usage charge against the product distributor-side processor based on an output from the product-distributor information receiving means.

6. A digital broadcast shopping system as claimed in Claim 2, wherein the product distributor-side processor comprises:
purchaser information extracting means operative to receive the purchaser-issued information and to extract the purchaser information from the purchaser-issued information; and
payment confirming means for acquiring information from an output from the purchaser information extracting means, the information indicating that the purchaser has made payment.

7. A digital broadcast shopping system as claimed in Claim 6, wherein the product distributor-side processor comprises:
receiver-manufacturer information extracting means for extracting, from the purchaser-issued information, at least any one of the manufacturer's name, the bank to which the receiver usage charge is to be transferred, and information on the bank account number;
receiver manufacturer confirming means for confirming as to whether a receiver manufacturer notified by the receiver manufacturer-side processor sending out the bill for the receiver usage charge agrees with a receiver manufacturer extracted by the receiver manufacturer extracting means; and
receiver-usage-charge payment means which performs a money transfer procedure for transferring the receiver usage charge to the account of the bank designated by the receiver manufacturer confirmed by the receiver manufacturer confirming means, the procedure performed based on the information sent from the payment confirming means and indicating that the payment has been made.

8. A digital broadcast shopping system as claimed in Claim 3, wherein the receiver usage charge is incurred when any one of decision on purchase, cancellation of purchase and request for product information and brochure is effected by means of the decision button.
